# EUROPEAN PATENT SPECIFICATION

(11) **EP 3 582 373 B1**
(45) Date of publication and mention of the grant of the patent: **01.03.2023**
(21) Application number: 19174634.6
(22) Date of filing: 15.05.2019
(51) Int. Cl.: H02K 5/124, F04D 29/12, H02K 7/14, F04D 13/06, D06F 39/08, D06F 103/48

(54) **BRUSHLESS DC MOTOR AND DRAIN PUMP HAVING THE SAME**
BÜRSTENLOSER GLEICHSTROMMOTOR UND ENTLEERUNGSPUMPE DAMIT
MOTEUR CC SANS BALAI ET POMPE DE DRAINAGE LE COMPRENANT

(30) Priority: 14.06.2018 KR 20180068277
(43) Date of publication of application: 18.12.2019
(73) Proprietor: LG ELECTRONICS INC., 07336 SEOUL (KR)
(72) Inventor: Cho, Sangyoung, 08592 Seoul (KR); Kim, Changsub, 08592 Seoul (KR); Lee, Seonjoong, 08592 Seoul (KR)
(74) Representative: Vossius & Partner Patentanwälte Rechtsanwälte mbB

(56) References cited:
- WO-A1-2018/014810
- KR-A- 20110 125 098
- US-A- 4 569 638

## Description

### BACKGROUND OF THE INVENTION

### 1. Field of the Invention

The present disclosure relates to a BLDC motor and a drain pump having the same. In particular, the present disclosure relates to a drain pump provided in a laundry treating apparatus or a dishwasher, and more particularly, to a drain pump for a household appliance that drains or circulates water or wash water.

### 2. Description of the Conventional Art

The laundry treating apparatus is a device for putting clothing, bedding or the like (hereinafter, referred to as laundry) into the drum to remove contamination from the laundry, and performs the processes of washing, rinsing, dehydrating, drying and the like.

In addition, the dishwasher repeatedly performs washing, draining, and the like in order to clean the tableware existing in the apparatus.

As described above, a drain pump is used in various household appliances, and in recent years, a pump for circulating water in household appliances and a pump for draining water to the outside of household appliances are integrally constructed.

On the other hand, water to be drained from household appliances generally contains various types of foreign substances such as detergent, soil, and lime materials. Therefore, when the drain pump is used for a long time, there is a problem that causes a failure due to foreign matters contained in the water.

Specifically, as a cumulative driving time of the drain pump is increased, it causes a problem in that not only the accumulation of foreign matters or floating matters contained in water progresses, but also water containing sediments penetrates into a rotor side of the drain pump.

Water infiltrating into the rotor side and sediments contained in the water interfere with the rotation of the rotor, and thus when the inflow of water to the rotor side is not prevented, the rotation of the rotor is restrained, thereby causing a failure of the drain pump.

In other words, when water containing impurities flows into the rotor side of the drain pump as the drain pump is driven for a long period of time, it causes a malfunction of the electric home appliance, thereby increasing the inconvenience of the user.

KR 2011-0125098 A relates to a brushless de motor and a drain pump having the same that are provided to reduce the friction loss of a rotary shaft while having high sealing.

### SUMMARY OF THE INVENTION

An object of the present disclosure is to improve the structure of a sealer provided in the drain pump, thereby preventing water inflow to the rotor side of the drain pump.

Furthermore, another object of the present disclosure is to improve the structure of a sealer to allow the sealer to flow according to the movement of the rotor.

In addition, still another object of the present disclosure is to provide a sealer with an improved structure in order to enhance the follow-up of the sealer with respect to the axial movement of the rotor.

In order to accomplish an object of the present disclosure, the present disclosure proposes an improved structure of a sealer having a sealer cover, a gasket and a sealer base.

Specifically, the sealer base according to the present disclosure is formed to support the gasket at a plurality of different points. In other words, the sealer base may include a first annular protruding portion spaced apart from a rotation shaft of the rotor to support the gasket, and a second annular protruding portion spaced apart from the first annular protruding portion to support the gasket.

The present invention is defined by the features of independent claim 1.

The dependent claims define features of preferred embodiments.

### BRIEF DESCRIPTION OF THE DRAWING

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view showing an outer appearance of a laundry treating apparatus;
FIG. 2 is a perspective view showing an inner appearance of a laundry treating apparatus including a drain pump;
FIG. 3 is a conceptual view showing an outer appearance of a drain pump for a laundry treating apparatus;
FIG. 4 is an exploded perspective view showing a drain pump according to the present disclosure;
FIG. 5 and 6 are an assembled perspective view and a longitudinal cross-sectional view showing the drain pump according to FIG. 4;
FIG. 7 is a longitudinal cross-sectional view showing a sealer and a housing of a drain pump according to the present disclosure;
FIG. 8 is a longitudinal cross-sectional view showing the sealer illustrated in FIG. 7;
FIG. 9 is a longitudinal cross-sectional view showing a process of supplying lubricant to the sealer; and
FIG. 10 is a conceptual view showing a contact surface between the sealer and the rotor shown in FIG. 7.

### DETAILED DESCRIPTION OF THE PREFERRED EMBODIMENT

Hereinafter, a drain pump for a laundry treating apparatus associated with the present disclosure will be described in detail with reference to the drawings.

Even in different embodiments according to the present disclosure, the same or similar reference numerals are designated to the same or similar configurations, and the description thereof will be substituted by the earlier description. Unless clearly used otherwise, expressions in the singular number used in the present disclosure may include a plural meaning.

Furthermore, in the following description, a drain pump applied to the laundry treating apparatus has been described, but application examples of a drain pump according to the present disclosure will not be limited to the laundry treating apparatus.

In other words, a drain pump according to the present disclosure may include a plurality of discharge ports, and may be applied to various products in order to perform the purpose of discharging water to one of the plurality of discharge ports using a single motor.

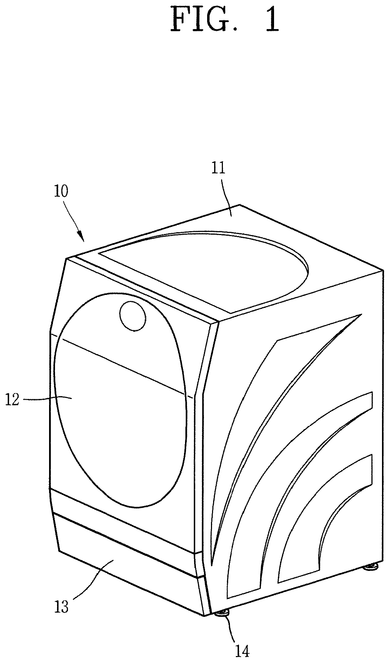

FIG. 1 is a view illustrating an outer appearance of the laundry treating apparatus 10.

The laundry treating apparatus 10 includes a laundry treating apparatus cabinet 11 forming an outer appearance, a drum 21 rotatably mounted in the cabinet 11 to put laundry thereinto, a lifter (not shown) provided within the drum 21, and a door 12 provided on a front surface of the cabinet 11. In addition, a detergent inlet cover 13 for covering the detergent inlet is positioned below the cabinet 11. Moreover, the laundry treating apparatus 10 includes a duct 15 and a heat exchanger (not shown) since air must be circulated to dry laundry accommodated in the drum 21.

A storage container (not shown) capable of accommodating detergent and fabric softener and being drawn out of the cabinet 11, a plurality of elastic members and a damper (not shown) configured to support the drum 21 to suppress vibration, and a driving motor (not shown) configured to rotate the drum 21 may be provided at a lower portion of the laundry treating apparatus 10. Furthermore, the door 12 may be provided on a front surface of the cabinet 11 so that laundry to be washed can be taken in and out. The door 12 may be configured to open and close a front surface of the drum 21. The door 12 may have a disk shape. An electric heater (not shown) capable of heating water when power is applied may be provided at a lower portion of the drum 21.

A drain pump for draining water or wash water inside the drum 21 may be provided at a lower side of the drum 21. Furthermore, a circulation pump (not shown) is provided at a lower side of the drum 21 to draw water out of the drum 21 so as to flow into an upper region of the drum 21. A filter unit (not shown) may be provided at one side of the drain pump 100 to collect foreign substances in water drawn out of the drum 21. A plurality of legs 14 spaced apart from the ground by a predetermined height to support the laundry treating apparatus are disposed at a lower portion of the laundry treating apparatus 10.

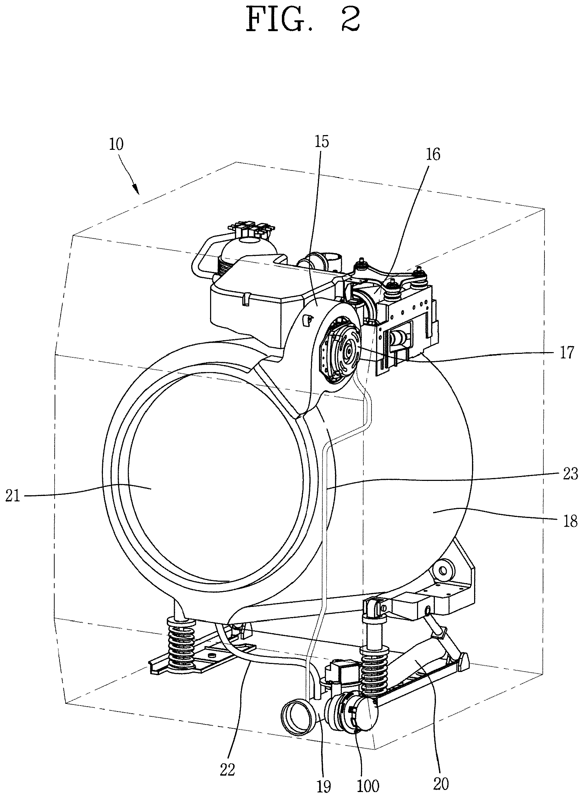

FIG. 2 is a view illustrating an inner appearance of the laundry treating apparatus 10 including the drain pump 100.

The laundry treating apparatus 10 includes a cabinet 11 for forming an outer appearance, a tub 18 accommodated in the cabinet 11, and a drum 21 rotatably mounted inside the tub 18 to put laundry thereinto. Furthermore, since air must be circulated in order to dry laundry in the drum 21, the laundry treating apparatus 10 includes a duct 15, a heat exchanger, and a fan motor 17, and includes a compressor 16 and a compressor support (not shown) for supporting the compressor. In addition, the laundry treating apparatus 10 includes a condensate discharge pipe 23 for discharging condensate generated from air passing through a heat exchanger (not shown) to the outside as the air is circulated, a drain pump chamber 19, a drain pump 100, a drain hose 20, and a drain connection pipe (not shown).

The drain pump 100 according to the present disclosure is positioned at a lower portion of the laundry treating apparatus 10. When water or wash water in the tub 19 moves to the drain pump chamber 19 and flows into the housing 110 of the drain pump 100, the drain pump 100 may perform a circulation process of moving the water or wash water through the circulation port 111 by the driving of the motor to move the water or wash water toward the tub or perform a drainage process of moving the inflow water or wash water toward the drain port 112 to discharge the water or wash water to the outside.

Referring to FIGS. 1 and 2, a drain pump provided in a drum washer or a front load type laundry treating apparatus has been described as a reference, but a sealer proposed in the present disclosure and a drain pump having the sealer may not be limited to the type of the laundry treating apparatus.

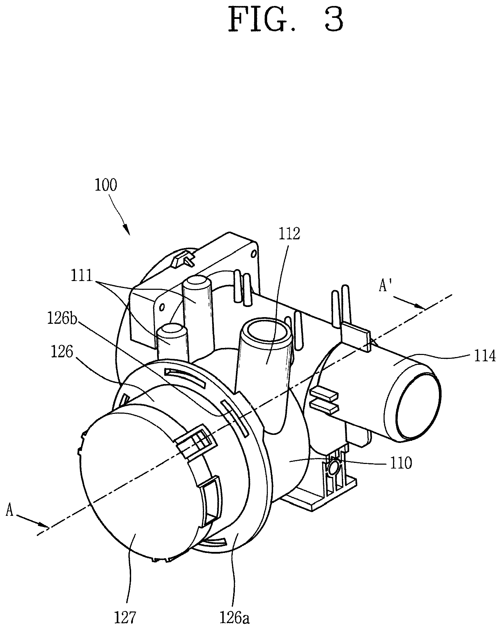

FIG. 3 is a view illustrating an outer appearance of the drain pump 100 for a laundry treating apparatus.

The drain pump 100 for a laundry treating apparatus according to the present disclosure includes a housing 110 configured to form an outer appearance thereof, an impeller 125 configured to form a flow of water or wash water rotated and accommodated inside the housing 110, and a motor (not shown) configured to provide power for rotating the motor.

Specifically, the housing 110 may be divided into a water flow portion 420 and a drain pump chamber 410. The housing 110 may accommodate water.

The drain pump chamber 410 may be formed on an inner circumferential surface of the housing 110 to receive or store water or wash water before the water or wash water flows into the water flowing unit 420.

The drain pump room 410 may receive contaminated water or wash water from the tub or receive clean water or wash water from the outside. Both ends of the drain pump chamber 410 may receive contaminated wash water or clean wash water, respectively.

The water flow portion 420 may be formed on an inner circumferential surface of the housing 110 to circulate water or wash water introduced from the drain pump chamber 410 to the tub or drain the water or wash water out of the washing machine so as to form a flow of the introduced water or wash water.

In other words, an impeller 125 rotating in an arbitrary direction by a motor is provided inside the water flow portion 420. The flow of water or wash water may be determined within the water flow portion 420 according to the rotational direction of the impeller 125.

In one embodiment, the housing 110 may include a first discharge port and a second discharge port spaced apart from one another to form a moving path of the accommodated water. The water flow portion 420 may include an impeller formed on an inner circumferential surface of the housing 110 to form a flow of water so that the water accommodated in the housing 110 is discharged through the first discharge port or discharged through the second discharge port.

The drain pump chamber 410 may be provided on an inner circumferential surface of the housing 110 to receive or store water before the water flows into the water flow portion 420.

The drain pump 100 for a laundry treating apparatus according to the present disclosure may perform the functions of a drain pump and a circulation pump, respectively, since the rotational direction of the motor is switchable differently from a drain pump in the related art. In addition, since a rotational speed of the motor is controllable, it may be possible to operate at a high speed in the drainage process and operate at a relatively low speed in the circulation process as compared with the drainage process, thereby preventing unnecessary noise and power consumption.

In other words, the drain pump 100 for a laundry treating apparatus according to the present disclosure may move water or wash water introduced from the drain pump 100 through the drain port 112 or the circulation port 111, thereby performing both the functions of the drain pump and the circulation pump.

The housing 110 may form an outer appearance of the drain pump 100 having a cylindrical shape, and thus a water inlet 114 may be formed at one end of the housing 110 so that water or wash water can be introduced into the housing 110. A filter (not shown) may be installed on one side of both ends of the water inlet 114 so as to filter foreign substances in the water or wash water, and then to move through the drain pump 100.

The water or wash water generated in the washing or drainage process flows into the housing 110 through the inlet port 113 formed on the housing 110 of the drain pump 100. The water or wash water contained in the housing 110 may be discharged to the outside through the drain port 112 or the circulation port 111 by the rotating impeller 125, and therefore, the water or wash water may continuously flow into the housing 110.

As illustrated in FIG. 3, an impeller case 126 for fixing the motor (not shown) and the impeller 125 is installed at the other end of the drain pump 100. The impeller case 126 is fixedly coupled to one end of the housing 110 of the drain pump 100. The impeller case 126 serves to fix the motor (not shown) and the impeller 125. The impeller 125 is connected to a rotation shaft of the motor (not shown) and receives a rotational force from a motor (not shown) to rotate inside the drain pump 100.

A flange portion 126a formed to protrude outward is formed on an outer circumferential surface of the impeller case 126. The flange portion 126a of the impeller case 126 is formed with a protrusion accommodation portion 126b so as to be fitted and fixed to one end of the drain pump 100. A protrusion portion 119 protruded from an outer circumferential surface of the housing 110 is fitted and fixed to the protrusion accommodation portion 126b. The protrusion accommodation portion 126b may be formed on an outer circumferential surface of the impeller case 126, and a plurality of the protrusion accommodation portions 126b may be formed along an outer circumferential surface of the impeller case 126 at regular intervals.

As illustrated in FIG. 3, the impeller case 126 may further include a circular impeller case cover 127 to limit the external exposures of the impeller 125 and the motor (not shown).

The protrusion portion 119 of the housing 110 may be fitted and fixed to the protrusion accommodation portion 126b of the impeller case 126, and thus the impeller 125 may rotate within the housing 110 in a state where the impeller case 126 is fixed to the housing 110.

The protrusion portion 119 may be formed on an outer circumferential surface of the housing 110. The protrusion portion 119 is formed to protrude outward from an outer circumferential surface of the housing 110. The protruding portions 119 may be formed at regular intervals along an outer circumferential surface thereof to correspond to the protrusion accommodation portions 126b of the impeller case 126.

The protruding portion 119 may be inserted into the protrusion accommodation portion 126b formed on the flange portion 126a of the impeller case 126, and then rotated and fitted therein so that the impeller case 126 can be fixed to the housing 110.

A first discharge port 111 and a second discharge port 112 formed to protrude from the housing 110 and spaced apart from each other to form a moving path of the accommodated water may be provided on an outer circumferential surface of the housing 11. In other words, the first discharge port 111 may correspond to a circulation port, and the second discharge port 112 may correspond to a drain port.

The drain port 112 and the circulation port 111 may be respectively formed on an outer circumferential surface of the housing 110. The drain port 112 is configured to communicate with an inside of the housing 110 and protrude in a tangential direction on an outer circumferential surface of the housing 110. When the drainage process is performed, the drain port 112 serves as a moving path for moving water or wash water accommodated therein by the rotation of the impeller 125 in one direction.

The circulation port 111 is configured to communicate with an inside of the housing 110 and protrude in a tangential direction on an outer circumferential surface of the housing 110. When the laundry treating apparatus performs a circulation process, the circulation port 111 serves as a moving path for moving water or wash water accommodated therein by the rotation of the impeller 125 in one direction.

In other words, the drain port 112 and the circulation port 111 are formed on an outer circumferential surface of the housing 110, and hoses are connected to the drain port 112 and the circulation port 111, respectively, to serve as a moving path for moving water or wash water in the drainage process and the circulation process. The drain port 112 and the circulation port 111 are formed at different positions.

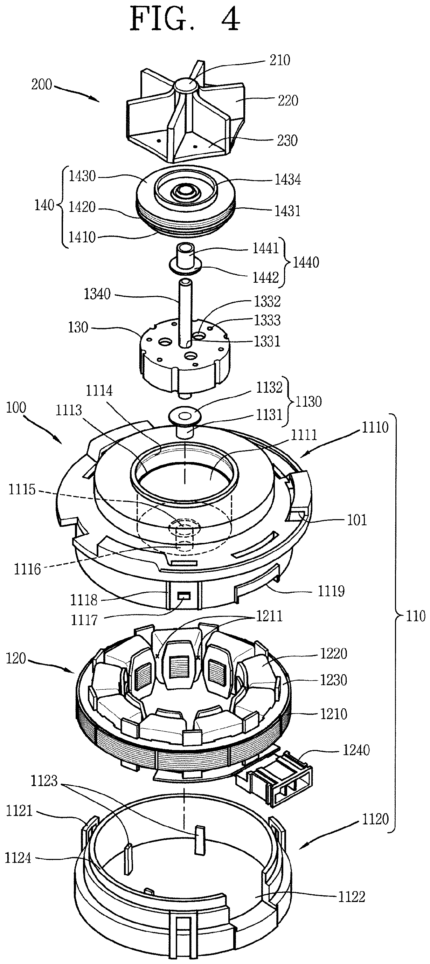

The internal structure of the drain pump 100 will be described below in FIG. 4.

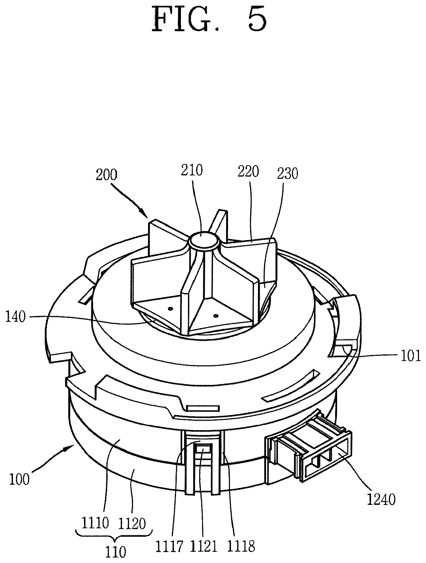

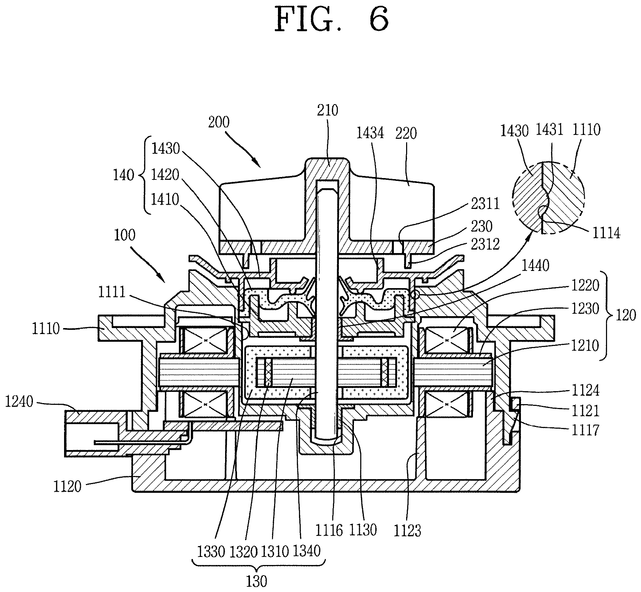

FIG. 4 is a perspective view of the drain pump according to the present disclosure in exploded view, FIG. 5 is a perspective view assembled with the drain pump according to FIG. 4, and FIG. 6 is a vertical sectional view showing the drain pump according to FIG.

Referring to FIGS. 4 through 6, a drain pump 17 according to the present disclosure includes a drain motor 100 coupled to a drain chamber 18 of a sump 11 to generate a rotational force in one or both directions, and a drain side impeller (hereinafter, abbreviated as an impeller) 200 axially coupled to a rotation shaft 1340 of the drain motor 100 to discharge washing water while rotating.

The drain motor 100 is provided with a stator 120 in a housing 110 having a sealed inner space, and a rotor 130 is rotatably provided outside the housing 110. In other words, as the stator 120 and the rotor 130 are separately provided on the inside and the outside of the housing 110, the drain motor 100 may effectively prevent washing water or dirt from flowing into the stator 120.

The housing 110 includes a first housing 1110 having a rotor receiving groove 1111 formed on one side surface thereof and an opening surface on the other side surface thereof and a second housing 1120 detachably coupled to the first housing 1110 to cover the opening surface of the first housing 1110 so as to seal an inner space provided with the stator 120.

One side surface of the first housing 1110, that is, an outer side surface facing the drain chamber 18, is formed with a plurality of fastening protrusions 103 along a circumferential direction thereof and rotatably coupled to a fastening groove 102 of a pump case 101 coupled to the drain chamber 18. Furthermore, the rotor receiving groove 1111 having a predetermined depth in the direction of the second housing is formed at the center of the outer side surface of the first housing 1110 to insert a rotor 130 which will be described later therein. The rotor receiving groove 1111 is formed in a shape that is closed at one side surface thereof in the axial direction, but open at the other side surface thereof, that is, in a direction facing the drain chamber 18.

A stator 120 is inserted and fixedly coupled to an outer circumferential surface of the rotor receiving groove 1111, that is, an inner space of the housing 110, and the rotor 130 is rotatably inserted into the rotor receiving groove 1111. Accordingly, the stator 120 and the rotor 130 are disposed with the housing 110 therebetween, at an inside and an outside thereof, respectively, and the rotor 130 is disposed in an axial height direction of the stator 120.

At least one or more ribs 1112 for rotation prevention are formed on an outer circumferential surface of the rotor receiving groove 1111 at predetermined intervals along a circumferential direction thereof to be positioned between the slots 1211 of the stator core 1210 which will be described later to prevent the stator 120 from moving in the circumferential direction. In addition, a mounting surface 1113 on which the sealer 140 which will be described later is mounted is formed in a stepped manner on an inner circumferential surface of the rotor receiving groove 1111, and a restraining groove 1114 is formed on an upper surface (opening side) of the mounting surface 1113 to insert a restraining protrusion 1431 of the sealer which will be described later thereinto so as to be restrained in an axial direction.

Furthermore, a bearing groove 1115 is formed at the center of a bottom surface of the rotor receiving groove 1111 to insert an end portion of the rotation shaft 1340 of the rotor 130 therein.

At least two or more hook protrusions 1117 (in the drawing, three hook protrusions are illustrated) are formed on an outer circumferential surface of the first housing 1110 in the circumferential direction, and at least two or more hooking hangers 1121 are formed on an edge surface of the second housing 1120 along the circumferential direction to be attached to and detached from the hook protrusions 1117.

The stator 120 may include a stator core 1210, a coil 1220, and an insulator 1230.

The stator core 1210 is formed by stacking a plurality of stator sheets having a plurality of slots 1211 in the circumferential direction in a cylindrical shape, and the coils 1220 are wound around the slots 1211 of the stator core 1210, and the insulator 1230 is interposed between the stator core 1210 and the coil 1220 to perform insulation. A substrate (not shown) for motor control is fixed to one side surface of the insulator 1230, and a connector 1240 is electrically connected to the substrate.

The rotor 130 includes a rotor core 1310, a plurality of magnets 1320, a molding cover 1330 surrounding the rotor core 1310 and the magnets 1320, and a rotation shaft 1340 integrally coupled to the rotor core 1310.

The rotor core 1310 is formed by stacking a plurality of rotor sheets having a shaft hole 1311 at the center thereof, and the plurality of magnets 1320 are inserted and fixed to a magnet mounting groove 1312 provided in the rotor core 1310, and the molding cover 1330 is formed by surrounding and molding an outer circumferential surface of the rotor core 1310 to support the magnets 1320 in the axial direction. Furthermore, the rotation shaft 1340 is integrally coupled to the rotor core 1310 to penetrate the molding cover 1330.

The sealer 140 may be provided between the rotor 130 and the impeller 200 to prevent the rotor 130 from being released from the rotor receiving groove 1111 while at the same time preventing washing water from infiltrating into the rotor 130.

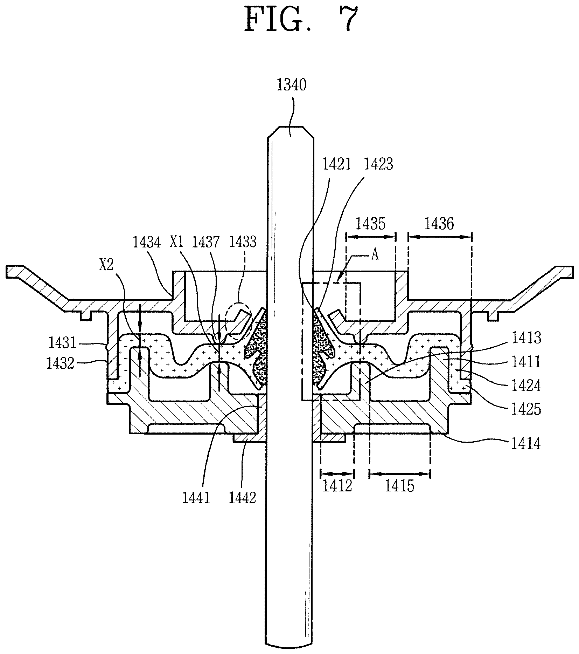

The structure of the sealer 140 proposed by the present disclosure will be described below in more detail in FIG. 7.

Referring to FIG. 7, the sealer 140 includes a sealing base 1410, a gasket 1420, and a sealing cover 1430.

The sealing base 1410 is rotatably coupled to the rotation shaft 1340 of the rotor 130, and an outer circumferential surface of the gasket 1420 is placed and coupled to the sealing base 1410 to be brought into contact with an inner circumferential surface of the rotor receiving groove 1111, and the sealing cover 1430 is coupled to the sealing base 1410 by pressing the gasket 1420 so that the gasket 1420 is fixed to the sealing base 1410.

The sealing base 1410 and the sealing cover 1430 are formed of a rigid material molded by resin while the gasket 1420 is formed of an elastic material such as rubber.

Furthermore, an annular restraining protrusion 1431 is formed in an annular shape on an outer circumferential surface of the sealing base 1410 or the sealing cover 1430 (on an outer circumferential surface of the sealing cover in the drawing). The restraining protrusion 1431 is inserted into the restraining groove 1114 formed in an annular shape on an inner circumferential surface of the rotor receiving groove 1111 to prevent the rotor 130 and the sealer 140 from being released from the housing 110.

A first annular protruding portion 1413 and a second annular protruding portion 1411 are formed on an upper surface of the sealing base 1410.

Specifically, the first annular protruding portion 1413 and the second annular protruding portion 1411 are formed to support the gasket 1420 at a plurality of different points. In other words, the sealer base 1410 may include a first annular protruding portion spaced apart from the rotation shaft 1340 of the rotor to support the gasket 1420, and a second annular protruding portion spaced apart from the first annular protruding portion 1413 to support the gasket 1420. At this time, the first and second annular protruding portions may each have a cylindrical shape.

In one example, the second annular protruding portion 1411 may be formed to protrude upward from an edge of the sealer base by a predetermined height.

Referring to FIG. 7, the first annular protruding portion 1413 may be formed closer to the rotation shaft than the second annular protruding portion 1411. In other words, the second annular protruding portion 1411 is provided on an outer side of the first annular protruding portion 1413 with respect to the rotation shaft 1340.

In one embodiment, the second annular protruding portion 1411 may be formed to protrude more than the first annular protruding portion 1413 from one side of the sealer base.

In other words, one end at a side of the sealer cover 1430 of the second annular protruding portion 1411 may be located above one end at a side of the sealer cover 1430 of the first annular protruding portion 1413.

In addition, a first portion of the gasket 1420 in contact with the first annular protruding portion 1413 may be formed thicker than a second portion of the gasket 1420 in contact with the second annular protruding portion 1411.

Moreover, an area in which the second annular protruding portion 1411 is brought into contact with the gasket 1420 may be formed larger than that in which the first annular protruding portion 1413 is brought into contact with the gasket.

On the other hand, a first opening is formed at the center of the sealing base 1410 to penetrate the rotation shaft, and the first annular protruding portion 1413 may be formed closer to the first opening than the second annular protruding portion 1411.

The first portion 1412 of the sealing base existing between a circumference of the first opening and an inner circumferential surface of the first annular protruding portion 1413 may be formed thicker than the second portion of the sealing base existing between an outer circumferential surface of the first annular protruding portion 1413 and an inner circumferential surface of the second annular protruding portion 1411.

Referring to FIG. 7, the sealer cover 1430 may include a first vertical wall 1434 spaced apart from the rotation shaft 1340 in a cylindrical shape and a second vertical wall 1432 spaced apart from the first vertical wall 1434 in a cylindrical shape.

As illustrated in FIG. 7, the first vertical wall 1434 may be formed to protrude upward from the first horizontal plate 1435 which will be described later. The second vertical wall 1432 may be formed to protrude downward from the second horizontal plate 1436 which will be described later. Furthermore, the first and second vertical walls may be formed in an annular shape or a cylindrical shape.

Moreover, the sealer cover 1430 may include a first horizontal plate 1435 coupled to an inner side of the first vertical wall 1434 and a second horizontal plate 1436 coupled to an outer side of the first vertical wall 1434 and an inner side of the second vertical wall 1432.

The first vertical wall 1434 may be disposed between the first horizontal plate 1435 and the second horizontal plate 1436, and the first horizontal plate 1435 is disposed below the second horizontal plate 1436.

In one embodiment, the first horizontal plate 1435 is coupled to the first vertical wall 1434 to be axially spaced from the second horizontal plate 1436 and the rotation shaft 1340.

Referring to FIG. 7, a second opening is formed at the center of the first horizontal plate 1435 to penetrate the rotation shaft 1340. Furthermore, the sealer cover 1430 includes a first rib 1433 extended in an axial direction of the rotation shaft 1340 at one inner side of the first horizontal plate 1435 with respect to the rotation shaft 1340 and is spaced apart from the rotation shaft 1340 to face the rotation shaft 1340.

The first rib 1433 may be formed at a predetermined angle with respect to the first vertical wall 1434 or the second vertical wall 1432 and may be formed in a shape biased toward the rotation shaft 1340.

Moreover, the sealer cover 1430 may include a second rib 1437 protruded from an outer surface of the first horizontal plate 1435 toward the gasket 1420.

Specifically, the second rib 1437 may be provided between the first rib 1433 and the first vertical wall 1434, and formed to be brought into contact with the gasket 1420.

In one embodiment, a portion of the gasket 1420 in contact with the second rib 1437 may correspond to a portion of the gasket 1420 in contact with the first annular protruding portion 1413.

In other words, a first region of the outer surface of the gasket 1420, which is in contact with the second rib 1437, and a second region of the outer surface of the gasket 1420, which is in contact with the first annular protruding portion 1413, are formed at positions facing each other. In other words, a distance between the center point of the first area and the rotation shaft 1340 may correspond to a distance between the center point of the second area and the rotation shaft 1340.

On the other hand, a width of the second rib 1437 is formed shorter than that of the first annular protruding portion 1413, and thus an area of the first region 1437 may be formed smaller than that of the second region 1413.

As described above, the second rib 1437 and the first annular protruding portion 1413 may be formed so that the centers of the first region and the second region correspond to each other and a width of the second rib 1437 may be formed shorter than that of the first annular protruding portion 1413, thereby preventing a portion where the gasket 1420 and the first annular protruding portion 1413 are brought into contact with each other from being excessively refracted.

Referring to FIG. 7, the second vertical wall 1432 may be formed at an edge portion of the sealing cover 1430 to be bent in the direction of the sealing base 1410 and inserted into an outer circumferential surface of the second annular protruding portion 1411.

A connection portion 1424 of the gasket 1420 is closely adhered and fixedly coupled between an outer circumferential surface of the second annular protruding portion 1411 and an inner circumferential surface of the second vertical wall 1432. In addition, a fixed portion 1425 of the gasket 1420 is pressed and fixed between an outer plane of the second annular protruding portion 1411 and an end surface of the second vertical wall 1432 corresponding thereto. An end of the fixed portion 1425 of the gasket 1420 is protruded slightly outward from an outer circumferential surface of the sealing base 1410 and the sealing cover 1430 to be elastically sealingly in contact with an inner circumferential surface of the rotor receiving groove 1111.

In one embodiment, the second vertical wall 1432 of the sealing cover may be inserted into an inner surface of the first housing.

Referring to FIG. 7, the gasket 1420 includes a gasket body 1424 in contact with the sealing cover 1430 and the sealing base 1410, and a close contact portion 1423 provided on an inner side of the gasket body with respect to the rotation shaft 1340 to be in contact with the rotation shaft, and a fixed portion 1425 provided outside the gasket body to support the gasket body.

Specifically, a third opening for allow the rotation shaft 1340 to pass therethrough is formed at the center of the close contact portion 1424, and an inner circumferential surface of the third opening is formed to be in contact with an outer circumferential surface of the rotation shaft 1340.

In particular, the close contact portion 1423 includes a plurality of branch members 1421 extended from the gasket body in a plurality of branches.

In one embodiment, the plurality of branch members 1421 may include a first branch member extended upward from the gasket body and a second branch member extended downward from the gasket body.

In another embodiment, the plurality of branch members 1421 may further include a third branch member disposed between the first and second branch members.

In a preferred example, a portion of the plurality of branch members 1421 in contact with an outer circumferential surface of the rotation shaft 1340 may be formed to have a thickness lower than a portion of the plurality of branch members connected to the gasket body.

Furthermore, the plurality of branch members 1421 may be brought into contact with an outer circumferential surface of the rotation shaft 1340 to form at least one sealing space.

On the other hand, referring to FIG. 7, a gap maintaining protrusion 1414 is formed in an annular shape at a position corresponding to the second annular protruding portion 1411 on a bottom surface of the sealing base 1410, that is, a surface facing the rotor 130, to maintain a gap with the rotor 130 .

In addition, a bearing bush 1440 made of a metal may be provided in the first opening formed on the sealing base 1410.

The bearing bush 1440 may include a journal bearing portion 1441 inserted into the first opening to support the rotation shaft 1340 in a journal direction and a thrust bearing portion 1442 bent and formed from the journal bearing portion 1441 and placed on a front end surface of the first opening and slidably in contact with an upper surface of the rotor 130 to support the rotation shaft 1340 in a thrust direction.

Here, the bearing bush 1440 may be provided in the first opening of the sealing cover 1430 as well as in the bearing hole 1412 of the sealing base 1410.

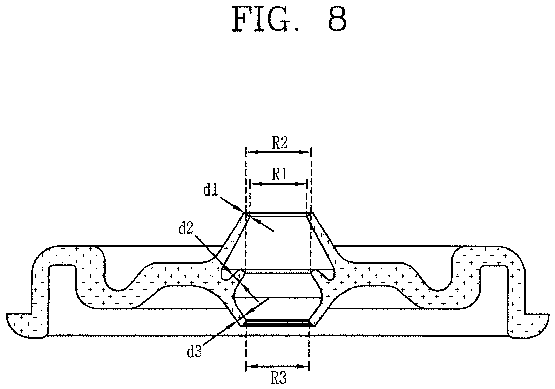

Referring to FIG. 8, a longitudinal cross-sectional view is shown before the gasket 1420 is coupled to the sealer 140.

As illustrated in FIG. 8, three branch members included in the gasket 1420 before being coupled to the sealer 140 may form three circles. Specifically, the diameter (R1) of a circle formed by a first branch member may be formed shorter than the diameters(R2, R3) of a circle formed by the other two branch members.

In another example, the diameter (R3) of a circle formed by a second branch member may be formed shorter than the diameter (R2) of a circle formed by a third branch member located at the center.

Moreover, the width (d1) of an end of the first branch member may be formed smaller than the width (d2, d3) of an end of the other two branch members.

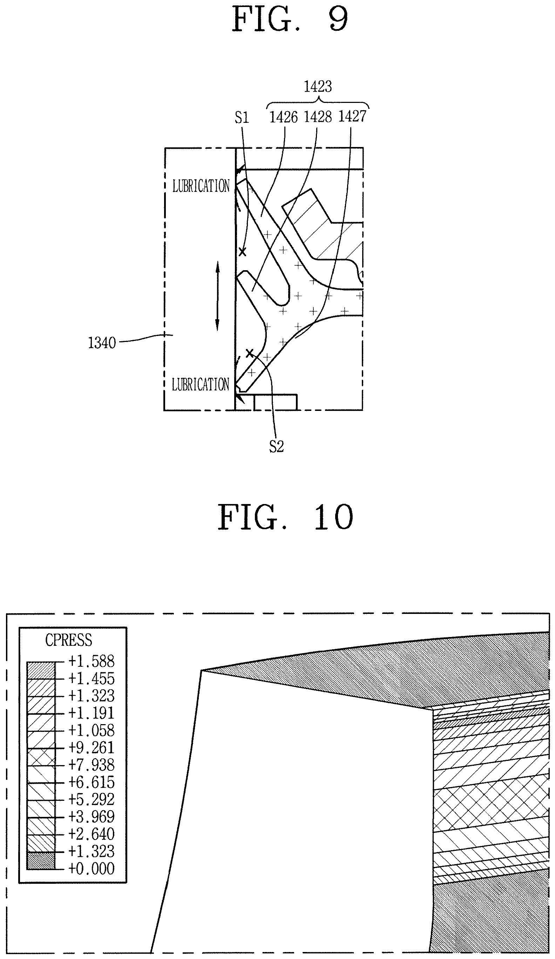

Referring to FIG. 9, a lubricant storage portion for storing lubricant may be formed in a third opening formed on the gasket 1420. The lubrication storage portion may be partitioned into a plurality of storage spaces along the axial direction to retain lubricant for a long period of time.

In other words, the close contact portion 1423 of the gasket 1420 is brought into contact with an outer circumferential surface of the rotation shaft 1340 at two or three points to form the lubricant storage portion, and the gasket body 1423 laterally extended from the close contact portion 1423, and a fixed portion 1425 formed at a radial end of the gasket body 1424 and brought into contact with the rotor receiving groove 1111 to seal the rotor receiving groove 1111.

For the close contact portion 1423, the first branch member 1426 is formed in the impeller direction, and the second branch member 1427 branched from the first branch member 1426 is formed in the rotor direction, and the third branch member 1428 located between the first and second branch members is extended laterally to form a first storage space (S1) between the first branch member 1426 and the third branch member and a second storage space (S2) between the second branch member 1427 and the third branch member.

On the other hand, the impeller 200 includes a boss portion 210, a plurality of blade portions 220, and a flange portion 230.

The boss portion 210 is coupled to the rotation shaft 1340 of the drain motor 100, and the blade portions 220 are extended radially from an outer circumferential surface of the boss portion 210, and the flange portion 230 is formed in a flat plate shape to connect between the blade portions 210.

Referring to FIG. 10, a pressure applied to a portion in contact with the rotation shaft 1340 on an outer surface of the branch member is illustrated in detail.

The branch member proposed in the present disclosure has a smaller thickness as being extended to the rotation shaft 1340, and an end of the branch member is formed to have a predetermined thickness so as to exhibit the maximum sealing force.

According to the present disclosure, the sealer surrounding the rotor may be configured to move together with the movement of the rotor, thereby obtaining an effect of stably supporting the rotor.

In other words, the structure of the sealer proposed in the present disclosure may have an advantage capable of improving the durability of the motor, and preventing the failure of the motor.

Furthermore, according to the present disclosure, an effect capable of preventing the phenomenon that water flows into the motor constituting the drain pump may be obtained.

In addition, according to the present disclosure, the amount of water flowing into the motor may be reduced, thereby improving the life of the motor of the drain pump.

## Claims

1. A motor (100), comprising:
a housing (110) comprising a first housing (1110) having a rotor receiving groove (1111) formed on one side surface thereof and an opening surface on
the other side surface thereof,
wherein the rotor receiving groove (1111) is formed at the center of the outer side surface, that is an axial top surface, of the first housing (1110) to insert a rotor (130),
wherein the rotor (130) is inserted into the rotor receiving groove (1111) and rotatably provided outside the first housing (1110),
wherein a stator (120) is inserted and fixedly coupled to an outer circumferential surface of the rotor receiving groove (1111), that is, in an inner space of the housing (110),
wherein the housing (110) further comprises a second housing (1120) coupled to the first housing (1110) to cover the opening surface of the first housing (1110) so as to seal the inner space wherein the stator (120) is fixedly provided;
a rotation shaft (1340) coupled to the rotor (130) and extended in one direction; and
a sealer (140) coupled to the first housing (1110) to surround the rotation shaft (1340),
wherein the sealer (140) comprises:
a sealing base (1410) rotatably coupled to the rotation shaft (1340),
a gasket (1420) formed to be brought into contact with an outer circumferential surface of the rotation shaft (1340), and
a sealing cover (1430) coupled to the sealing base (1410) to fix the gasket (1420) to the sealing base (1410),
wherein the sealing cover (1430) is coupled to the sealing base (1410) by pressing the gasket (1420) so that the gasket (1420) is fixed to the sealing base (1410);
the sealing base (1410) comprises:
a first annular protruding portion (1413) spaced apart from the rotation shaft (1340) to support the gasket (1420), and
a second annular protruding portion (1411) spaced apart from the first annular protruding portion (1413) to support the gasket (1420),
wherein a first opening is formed at the center of the sealing base (1410) for allowing the rotating shaft (1340) to pass therethrough,
wherein the first annular protruding portion (1413) and the second annular protruding portion (1411) are formed on an upper surface of the sealing base to support the gasket (1420),
wherein the first annular protruding portion (1413) is formed closer to the rotation axis than the second annular protruding portion (1411),
wherein the sealing cover (1430) comprises:
a first vertical wall (1434) spaced apart from the rotation shaft (1340) to have a cylindrical shape,
a second vertical wall (1432) spaced apart from the first vertical wall (1434) to have a cylindrical shape,
a first horizontal plate (1435) coupled to an inner side of the first vertical wall (1434), and
a second horizontal plate (1436) coupled to an outer side of the first vertical wall (1434) and to an inner side of the second vertical wall (1432),
wherein the first horizontal plate (1435) is axially spaced below the second horizontal plate (1436),
wherein a second opening is formed at the center of the first horizontal plate (1435) for allowing the rotating shaft (1340) to pass therethrough,
wherein the sealer cover (1430) includes a first rib (1433) extended in an axial direction of the rotation shaft (1340) away from the sealing base (1410) at one inner side of the first horizontal plate (1435) with respect to the rotation shaft (1340) and spaced apart from the rotation shaft (1340) to face the rotation shaft (1340),
wherein the sealing cover (1430) comprises a second rib (1437) protruded from an outer surface of the first horizontal plate (1435) toward the gasket (1420),
wherein the second rib (1437) is provided between the first rib (1433) and the first vertical wall (1434), and formed in contact with the gasket (1420),
wherein the gasket (1420) comprises:
a gasket body (1424) in contact with the sealing cover (1430) and the sealing base (1410), and
a close contact portion (1423) provided on an inner side of the gasket body (1424) with respect to the rotation shaft (1340) to be in contact with the rotation shaft (1340),
wherein a third opening for allowing the rotation shaft (1340) to pass therethrough is formed at the center of the close contact portion (1423), and an inner circumferential surface of the third opening is formed to be in contact with an outer circumferential surface of the rotation shaft (1340),
wherein a first region of the outer surface of the gasket (1420), which is in contact with the second rib (1437), and a second region of the outer surface of the gasket (1420), which is in contact with the first annular protruding portion (1413), are formed at positions facing each other, and
wherein the close contact portion (1423) comprises a plurality of branch members (1421) extended from the gasket body in a plurality of branches.

2. The motor (100) of claim 1, wherein a portion of the plurality of branch members (1421) in contact with an outer circumferential surface of the rotation shaft (1340) is formed to have a thickness lower than a portion of the plurality of branch members (1421) connected to the gasket body (1424).

3. The motor (100) of claim 1 or 2, wherein the plurality of branch members (1421) comprises a first branch member (1426) extended upward from the gasket body (1424) and a second branch member (1427) extended downward from the gasket body (1424).

4. The motor (100) of claim 3, wherein the plurality of branch members (1421) further comprises a third branch member (1428) disposed between the first and second branch members (1426, 1427).

5. The motor (100) of claim 4, wherein the width (d1) of an end of the first branch member (1426) is formed smaller than the width (d2, d3) of an end of the other two branch members (1427, 1428).

6. The motor (100) of claim 4 or 5, wherein the three branch members (1426, 1427, 1428) comprised in the gasket (1420) form three circles, and the diameter (R1) of a circle formed by a first branch member (1426) is formed shorter than the diameters (R2, R3) of a circle formed by the other two branch members (1427, 1428).

7. The motor (100) of any one of claims 4 to 6, wherein the diameter (R3) of a circle formed by a second branch member (1427) is formed shorter than the diameter (R2) of a circle formed by a third branch member (1428) located at the center.

8. The motor (100) of any one of claims 1 to 7, wherein a second opening is formed at the center of the first horizontal plate (1435) to allow the rotation shaft (1340) to pass therethrough, and
the sealing cover (1430) comprises a first rib (1433) extended in an axial direction of the rotation shaft (1340) from an inner end of the first horizontal plate (1435) with respect to the rotation shaft (1340), and spaced apart from the rotation shaft (1340) to face the rotation shaft (1340).

9. The motor (100) of any one of claims 1 to 8, wherein a portion of the gasket (1420) in contact with the second rib (1437) corresponds to a portion of the gasket (1420) in contact with the first annular protruding portion (1413).

10. The motor (100) of any one of claims 1 to 9, wherein an area of the second rib (1437) in contact with the gasket (1420) is formed smaller than an area of the first annular protruding portion (1413) in contact with the gasket (1420).

11. The motor (100) of any one of claims 1 to 10, wherein the first horizontal plate (1435) is coupled to the first vertical wall (1434) to be spaced apart from the second horizontal plate (1436) on an axial direction of the rotation shaft (1340).

12. A pump comprising the motor (100) according to any one of claims 1 to 11.

## Patentansprüche

1. Motor (100), der aufweist:
ein Gehäuse (110), das ein erstes Gehäuse (1110) aufweist, das eine Rotoraufnahmenut (1111), die auf seiner einen Seitenfläche ausgebildet ist, und eine Öffnungsfläche auf seiner anderen Seitenfläche aufweist,
wobei die Rotoraufnahmenut (1111) in der Mitte der äußeren Seitenfläche, das heißt einer axialen Oberseite, des ersten Gehäuses (1110) ausgebildet ist, um einen Rotor (130) einzusetzen,
wobei der Rotor (130) in die Rotoraufnahmenut (1111) eingesetzt ist und drehbar außerhalb des ersten Gehäuses (1110) vorgesehen ist,
wobei ein Stator (120) eingesetzt und fest mit einer äußeren Umfangsfläche der Rotoraufnahmenut (1111) gekoppelt ist, das heißt, in einem Innenraum des Gehäuses (110),
wobei das Gehäuse (110) ferner ein zweites Gehäuse (1120) aufweist, das mit dem ersten Gehäuse (1110) gekoppelt ist, um die Öffnungsfläche des ersten Gehäuses (1110) abzudecken, um den Innenraum abzudichten, in dem der Stator (120) fest vorgesehen ist,
eine Drehwelle (1340), die mit dem Rotor (130) gekoppelt ist und sich in einer Richtung erstreckt, und
eine Abdichtung (140), die mit dem ersten Gehäuse (1110) gekoppelt ist, um die Drehwelle (1340) zu umgeben,
wobei die Abdichtung (140) aufweist:
eine Dichtungsbasis (1410), die drehbar mit der Drehwelle (1340) gekoppelt ist,
eine Dichtung (1420), die ausgebildet ist, um mit einer äußeren Umfangsfläche der Drehwelle (1340) in Kontakt gebracht zu werden, und
eine Dichtungsabdeckung (1430), die mit der Dichtungsbasis (1410) gekoppelt ist, um die Dichtung (1420) an der Dichtungsbasis (1410) zu befestigen,
wobei die Dichtungsabdeckung (1430) mit der Dichtungsbasis (1410) gekoppelt ist, indem die Dichtung (1420) gepresst wird, so dass die Dichtung (1420) an der Dichtungsbasis (1410) befestigt wird,
wobei die Dichtungsbasis (1410) aufweist:
einen ersten ringförmigen, vorstehenden Abschnitt (1413), der von der Drehwelle (1340) beabstandet ist, um die Dichtung (1420) zu halten, und
einen zweiten ringförmigen vorstehenden Abschnitt (1411), der vom ersten ringförmigen vorstehenden Abschnitt (1413) beabstandet ist, um die Dichtung (1420) zu halten,
wobei eine erste Öffnung in der Mitte der Dichtungsbasis (1410) ausgebildet ist, um es zu ermöglichen, dass die Drehwelle (1340) dort hindurchgeht,
wobei der erste ringförmige vorstehende Abschnitt (1413) und der zweite ringförmige vorstehende Abschnitt (1411) auf einer oberen Fläche der Dichtungsbasis ausgebildet sind, um die Dichtung (1420) zu halten,
wobei der erste ringförmige vorstehende Abschnitt (1413) näher an der Drehachse ausgebildet ist als der zweite ringförmige vorstehende Abschnitt (1411),
wobei die Dichtungsabdeckung (1430) aufweist:
eine erste vertikale Wand (1434), die von der Drehwelle (1340) beabstandet ist, um eine zylindrische Form aufzuweisen,
eine zweite vertikale Wand (1432), die von der ersten vertikalen Wand (1434) beabstandet ist, um eine zylindrische Form aufzuweisen,
eine erste horizontale Platte (1435), die mit einer Innenseite der ersten vertikalen Wand (1434) gekoppelt ist, und
eine zweite horizontale Platte (1436), die mit einer Außenseite der ersten vertikalen Wand (1434) und mit einer Innenseite der zweiten vertikalen Wand (1432) gekoppelt ist, wobei die erste horizontale Platte (1435) unter der zweiten horizontalen Platte (1436) axial beabstandet ist,
wobei eine zweite Öffnung in der Mitte der ersten horizontalen Platte (1435) ausgebildet ist, um es zu ermöglichen, dass die Drehwelle (1340) dort hindurchgeht,
wobei die Dichtungsabdeckung (1430) eine erste Rippe (1433) aufweist, die sich in einer axialen Richtung der Drehwelle (1340) weg von der Dichtungsbasis (1410) auf einer Innenseite der ersten horizontalen Platte (1435) in Bezug auf die Drehwelle (1340) erstreckt und von der Drehwelle (1340) beabstandet ist, um der Drehwelle (1340) gegenüberzuliegen,
wobei die Dichtungsabdeckung (1430) eine zweite Rippe (1437) aufweist, die von einer Außenfläche der ersten horizontalen Platte (1435) zur Dichtung (1420) vorsteht,
wobei die zweite Rippe (1437) zwischen der ersten Rippe (1433) und der ersten vertikalen Wand (1434) vorgesehen ist und in Kontakt mit der Dichtung (1420) ausgebildet ist,
wobei die Dichtung (1420) aufweist:
einen Dichtungskörper (1424), der in Kontakt mit dem Dichtungsdeckel (1430) und der Dichtungsbasis (1410) steht, und
einen engen Kontaktabschnitt (1423), der an einer Innenseite des Dichtungskörpers (1424) in Bezug auf die Drehwelle (1340) vorgesehen ist, um in Kontakt mit der Drehwelle (1340) zu stehen,
wobei eine dritte Öffnung, um es zu ermöglichen, dass die Drehwelle (1340) dort hindurchgeht, in der Mitte des engen Kontaktabschnitts (1423) ausgebildet ist, und eine Innenumfangsfläche der dritten Öffnung so ausgebildet ist, dass sie mit einer Außenumfangsfläche der Drehwelle (1340) in Kontakt steht,
wobei ein erster Bereich der Außenfläche der Dichtung (1420), der in Kontakt mit der zweiten Rippe (1437) steht, und ein zweiter Bereich der Außenfläche der Dichtung (1420), der in Kontakt mit dem ersten ringförmigen vorstehenden Abschnitt (1413) steht, an einander gegenüberliegenden Positionen ausgebildet sind, und
wobei der enge Kontaktabschnitt (1423) mehrere Verzweigungselemente (1421) aufweist, die sich von dem Dichtungskörper in mehreren Verzweigungen erstrecken.

2. Motor (100) nach Anspruch 1, wobei ein Abschnitt der mehreren Verzweigungselemente (1421), der in Kontakt mit einer Außenumfangsfläche der Drehwelle (1340) steht, so ausgebildet ist, dass er eine geringere Dicke aufweist als ein Abschnitt der mehreren Verzweigungselemente (1421), der mit dem Dichtungskörper (1424) verbunden ist.

3. Motor (100) nach Anspruch 1 oder 2, wobei die mehreren Verzweigungselemente (1421) ein erstes Verzweigungselement (1426), das sich vom Dichtungskörper (1424) nach oben erstreckt, und ein zweites Verzweigungselement (1427) aufweisen, das sich von dem Dichtungskörper (1424) nach unten erstreckt.

4. Motor (100) nach Anspruch 3, wobei die mehreren Verzweigungselemente (1421) ferner ein drittes Verzweigungselement (1428) aufweisen, das zwischen dem ersten und dem zweiten Verzweigungselement (1426, 1427) angeordnet ist.

5. Motor (100) nach Anspruch 4, wobei die Breite (d1) eines Endes des ersten Verzweigungselements (1426) kleiner als die Breite (d2, d3) eines Endes der anderen beiden Verzweigungselemente (1427, 1428) ausgebildet ist.

6. Motor (100) nach Anspruch 4 oder 5, wobei die drei Verzweigungselemente (1426, 1427, 1428), die in der Dichtung (1420) enthalten sind, drei Kreise bilden und der Durchmesser (R1) eines von einem ersten Verzweigungselement (1426) gebildeten Kreises kürzer als die Durchmesser (R2, R3) eines von den anderen beiden Verzweigungselementen (1427, 1428) gebildeten Kreises ausgebildet ist.

7. Motor (100) nach einem der Ansprüche 4 bis 6, wobei der Durchmesser (R3) eines von einem zweiten Verzweigungselement (1427) gebildeten Kreises kürzer ist als der Durchmesser (R2) eines von einem dritten Verzweigungselement (1428) gebildeten Kreises, das sich in der Mitte befindet.

8. Motor (100) nach einem der Ansprüche 1 bis 7, wobei in der Mitte der ersten horizontalen Platte (1435) eine zweite Öffnung ausgebildet ist, um es zu ermöglichen, dass die Drehwelle (1340) dort hindurchgeht, und
die Dichtungsabdeckung (1430) eine erste Rippe (1433) aufweist, die sich von einem inneren Ende der ersten horizontalen Platte (1435) in Bezug auf die Drehwelle (1340) in einer axialen Richtung der Drehwelle (1340) erstreckt und von der Drehwelle (1340) beabstandet ist, um der Drehwelle (1340) gegenüber zu liegen.

9. Motor (100) nach einem der Ansprüche 1 bis 8, wobei ein Abschnitt der Dichtung (1420), der mit der zweiten Rippe (1437) in Kontakt ist, einem Abschnitt der Dichtung (1420) entspricht, der mit dem ersten ringförmigen vorstehenden Teil (1413) in Kontakt ist.

10. Motor (100) nach einem der Ansprüche 1 bis 9, wobei ein Bereich der zweiten Rippe (1437), der in Kontakt mit der Dichtung (1420) steht, kleiner ausgebildet ist als ein Bereich des ersten ringförmigen vorstehenden Abschnitts (1413), der in Kontakt mit der Dichtung (1420) steht.

11. Motor (100) nach einem der Ansprüche 1 bis 10, wobei die erste horizontale Platte (1435) mit der ersten vertikalen Wand (1434) so gekoppelt ist, dass sie von der zweiten horizontalen Platte (1436) in einer axialen Richtung der Drehwelle (1340) beabstandet ist.

12. Pumpe, die den Motor (100) nach einem der Ansprüche 1 bis 11 aufweist.

## Revendications

1. Moteur (100), comprenant :
un carter (110) comprenant un premier carter (1110) présentant une rainure de réception (1111) de rotor formée sur une surface latérale de celui-ci et une surface d'ouverture sur l'autre surface latérale de celui-ci,
où la rainure de réception (1111) de rotor est formée au centre de la surface latérale extérieure, laquelle est une surface axiale supérieure du premier carter (1110), pour l'insertion d'un rotor (130),
où le rotor (130) est inséré dans la rainure de réception (1111) de rotor et prévu de manière rotative à l'extérieur du premier carter (1110),
où un stator (120) est inséré dans une surface circonférentielle extérieure de la rainure de réception (1111) de rotor et raccordé fixement à celle-ci, soit dans un espace intérieur du carter (110),
où le carter (110) comprend en outre un deuxième carter (1120) raccordé au premier carter (1110) de manière à couvrir la surface d'ouverture du premier carter (1110) afin d'étanchéifier l'espace intérieur où le stator (120) est prévu de manière fixe ;
un arbre rotatif (1340) raccordé au rotor (130) et s'étendant dans une direction ; et
un garniture d'étanchéité (140) raccordé au premier carter (1110) de manière à entourer l'arbre rotatif (1340),
où la garniture d'étanchéité (140) comprend :
une base de garniture (1410) raccordée de manière rotative à l'arbre rotatif (1340),
un joint (1420) formé de manière à venir en contact avec une surface circonférentielle extérieure de l'arbre rotatif (1340), et
un capuchon d'étanchéité (1430) raccordé à la base de garniture (1410) pour fixer le joint (1420) à la base de garniture (1410),
où le capuchon d'étanchéité (1430) est raccordé à la base de garniture (1410) par compression du joint (1420) de manière à fixer le joint (1420) à la base de garniture (1410) ;
où la base de garniture (1410) comprend :
une première partie en saillie annulaire (1413) espacée de l'arbre rotatif (1340) pour supporter le joint (1420), et
une deuxième partie en saillie annulaire (1411) espacée de la première partie en saillie annulaire (1413) pour supporter le joint (1420),
où une première ouverture est formée au centre de la base de garniture (1410) pour permettre le passage de l'arbre rotatif (1340),
où la première partie en saillie annulaire (1413) et la deuxième partie en saillie annulaire (1411) sont formées sur une surface supérieure de la base de garniture pour supporter le joint (1420),
où la première partie en saillie annulaire (1413) est formée de manière à être plus proche de l'axe de rotation que la deuxième partie en saillie annulaire (1411),
où le capuchon d'étanchéité (1430) comprend :
une première paroi verticale (1434) espacée de l'arbre rotatif (1340) de manière à avoir une forme cylindrique,
une deuxième paroi verticale (1432) espacée de la première paroi verticale (1434) de manière à avoir une forme cylindrique,
une première plaque horizontale (1435) raccordée à une face intérieure de la première paroi verticale (1434), et
une deuxième plaque horizontale (1436) raccordée à une face extérieure de la première paroi verticale (1434) et à une face intérieure de la deuxième paroi verticale (1432),
où la première plaque horizontale (1435) est espacée axialement en dessous de la deuxième plaque horizontale (1436),
où une deuxième ouverture est formée au centre de la première plaque horizontale (1435) pour permettre le passage de l'arbre rotatif (1340),
où le capuchon d'étanchéité (1430) présente une première nervure (1433) s'étendant dans une direction axiale de l'arbre rotatif (1340) à distance de la base de garniture (1410) sur une face intérieure de la première plaque horizontale (1435) par rapport à l'arbre rotatif (1340) et espacée de l'arbre rotatif (1340) de manière à faire face à l'arbre rotatif (1340), où le capuchon d'étanchéité (1430) présente une deuxième nervure (1437) faisant saillie depuis une surface extérieure de la première plaque horizontale (1435) vers le joint (1420),
où la deuxième nervure (1437) est prévue entre la première nervure (1433) et la première paroi verticale (1434), et est formée en contact avec le joint (1420),
où le joint (1420) comprend :
un corps de joint (1424) en contact avec le capuchon d'étanchéité (1430) et la base de garniture (1410), et
une partie en contact étroit (1423) prévue sur une face intérieure du corps de joint (1424) par rapport à l'arbre rotatif (1340) de manière à être en contact avec l'arbre rotatif (1340),
où une troisième ouverture permettant le passage de l'arbre rotatif (1340) est formée au centre de la partie en contact étroit (1423), et une surface circonférentielle intérieure de la troisième ouverture est formée de manière à être en contact avec une surface circonférentielle extérieure de l'arbre rotatif (1340),
où une première zone de la surface extérieure du joint (1420), laquelle est en contact avec la deuxième nervure (1437), et une deuxième zone de la surface extérieure du joint (1420), laquelle est en contact avec la première partie en saillie annulaire (1413), sont formées à des emplacements se faisant face l'un à l'autre, et
où la partie en contact étroit (1423) comprend une pluralité d'éléments ramifiés (1421) s'étendant depuis le corps de joint avec une pluralité de ramifications.

2. Moteur (100) selon la revendication 1, où une partie de la pluralité d'éléments ramifiés (1421) en contact avec une surface circonférentielle extérieure de l'arbre rotatif (1340) est formée de manière à avoir une épaisseur inférieure à une partie de la pluralité d'éléments ramifiés (1421) raccordés au corps de joint (1424).

3. Moteur (100) selon la revendication 1 ou la revendication 2, où la pluralité d'éléments ramifiés (1421) comprend un premier élément ramifié (1426) s'étendant vers le haut depuis le corps de joint (1424) et un deuxième élément ramifié (1427) s'étendant vers le bas depuis le corps de joint (1424).

4. Moteur (100) selon la revendication 3, où la pluralité d'éléments ramifiés (1421) comprend en outre un troisième élément ramifié (1428) disposé entre le premier et le deuxième éléments ramifiés (1426, 1427).

5. Moteur (100) selon la revendication 4, où la largeur (d1) d'une extrémité du premier élément ramifié (1426) est prévu de manière à être inférieure à la largeur (d2, d3) d'une extrémité de l'autre des deux éléments ramifiés (1427, 1428).

6. Moteur (100) selon la revendication 4 ou la revendication 5, où les trois éléments ramifiés (1426, 1427, 1428) compris dans le joint (1420) forment trois cercles, et le diamètre (R1) d'un cercle formé par un premier élément ramifié (1426) est prévu de manière à être inférieur aux diamètres (R2, R3) d'un cercle formé par l'autre des deux éléments ramifiés (1427, 1428).

7. Moteur (100) selon l'une des revendications 4 à 6, où le diamètre (R3) d'un cercle formé par un deuxième élément ramifié (1427) est prévu de manière à être inférieur au diamètre (R2) d'un cercle formé par un troisième élément ramifié (1428) situé au centre.

8. Moteur (100) selon l'une des revendications 1 à 7, où une deuxième ouverture est formée au centre de la première plaque horizontale (1435) pour permettre le passage de l'arbre rotatif (1340), et
le capuchon d'étanchéité (1430) comprend une première nervure (1433) s'étendant dans une direction axiale de l'arbre rotatif (1340) depuis une extrémité intérieure de la première plaque horizontale (1435) par rapport à l'arbre rotatif (1340), et est espacée de l'arbre rotatif (1340) de manière à faire face à l'arbre rotatif (1340).

9. Moteur (100) selon l'une des revendications 1 à 8, où une partie du joint (1420) en contact avec la deuxième nervure (1437) correspond à une partie du joint (1420) en contact avec la première partie en saillie annulaire (1413).

10. Moteur (100) selon l'une des revendications 1 à 9, où une surface de la deuxième nervure (1437) en contact avec le joint (1420) est prévue de manière à être inférieure à une surface de la première partie en saillie annulaire (1413) en contact avec le joint (1420).

11. Moteur (100) selon l'une des revendications 1 à 10, où la première plaque horizontale (1435) est raccordée à la première paroi verticale (1434) de manière à être espacée de la deuxième plaque horizontale (1436) dans une direction axiale de l'arbre rotatif (1340).

12. Pompe, comprenant le moteur (100) selon l'une des revendications 1 à 11.
